# EUROPEAN PATENT SPECIFICATION

(11) **EP 2 098 063 B1**
(45) Date of publication and mention of the grant of the patent: **28.12.2011**
(21) Application number: 07849217.0
(22) Date of filing: 22.11.2007
(51) Int. Cl.: H04N 5/00

(54) **SYSTEM AND METHOD FOR MONITORING SYNCHRONIZATION**
SYSTEM UND VERFAHREN ZUR SYNCHRONISATIONSÜBERWACHUNG
SYSTÈME ET PROCÉDÉ DE SURVEILLANCE DE LA SYNCHRONISATION

(30) Priority: 28.11.2006 EP 06124929
(43) Date of publication of application: 09.09.2009
(73) Proprietor: AMBX UK Limited, Redhill Surrey RH1 1FH (GB)
(72) Inventor: BERKVENS, Winfried A. H., 5656 AE Eindhoven (NL); HORSTEN, Jan B. A. M., 5656 AE Eindhoven (NL)
(74) Representative: Turner, Richard Charles
(86) International application number: PCT/IB2007/054743
(87) International publication number: WO 2008/065587

(56) References cited:
- WO-A-03/089100
- WO-A-2004/082275
- US-A1- 2001 036 203
- US-A1- 2002 154 773

## Description

### FIELD OF THE INVENTION

This invention relates to a system comprising a set of devices and to a method of operating the system.

### BACKGROUND OF THE INVENTION

Developments in the entertainment world have 1ed to the creation of augmentation systems, which provide additional effects in addition to a user's primary entertainment experience. An example of this would be a film, which is being presented by a display device and connected audio devices, and is augmented by other devices in the ambient environment. These additional devices may be, for example, lighting devices or temperature devices that are controlled in line with the film's content. If a scene is being shown in the film that is underwater, then additional lights may provide a blue ambient environment, and a fan may operate to lower the temperature of the room.

For example, United States of America Patent Application Publication US 2002/0154773 discloses the encoding of a DMX data stream into an audio stream to provide additional scenes, props, special effects, lights, sounds, and music in an entertainment venue. The DMX codes are typically incorporated into the audio stream so that they are synchronized with the performance recorded on a digital video stream.

The project amBX (see www.amBX.com) is developing a scripting technology that enables the description of effects that can enhance a content experience. In essence, amBX is a form of markup language for describing the high-level descriptions of enhanced experiences. From the scripts, an amBX engine generates information containing low-level input for devices at different locations in the user's environment. The amBX engine communicates this input to the effects devices, which steer their actuators with this input. Together, the output of various actuators of the augmenting devices at the specific locations creates the enhanced experiences described by the amBX scripts for those locations.

The user experience with respect to activities such as watching television will change in the coming future with the introduction of amBX for systems such as Home Cinema. One issue with such augmentation in a multimedia system is the correct synchronization of the additional effects with the original content that the user is accessing. In the example above, the blue lights and cooling fan that will provide the augmentation to the underwater scene must be correctly synchronized with the correct scene in the original film.

One technology that can be used for controlling the synchronizing of the script playback (which controls the effects devices) and the video playback is fingerprinting. In this context, fingerprinting relates to the identifying of some factor within the delivered video. The fingerprint may be added to the video or may be based upon some already present characteristic of the video, such as average luminance of a frame, or color of a specific pixel etc. With the use of fingerprinting technology to synchronize script and video playback, the accuracy/exactness of the time-values delivered by this technology are important to get a good synchronization. The accuracy of time-values changes over time due to the differences in discriminating power of the various fingerprints or the occurrence of multiple similar fingerprints in the same content. Owing to this it is possible that incorrect time-values are used for the synchronization. If this happens wrong effects could be played-out/rendered resulting in showing inaccurate/disrupted experiences to the user.

Another possible source of difficulty in synchronizing may occur, for example, in relation to films provided as video and audio content that is rendered, where there can in fact be in existence, several versions of the same film, which have been produced for different territories and for different media such as television broadcast, cable transmission or DVD. These versions may differ from each other in only the slightest fashion, with for example, scenes being shortened by removal of perhaps five seconds of material, to satisfy censorship requirements in specific territories. It is also increasingly common for films to go to DVD in longer versions than originally shown in the cinematic release, adding in scenes cut from the first release of the film. All of these things make the synchronization of augmentation effects to content difficult to guarantee 100%, as the script defining the effects for a specific film may be originally synchronized to a slightly different version of the film.

### SUMMARY OF THE INVENTION

It is an object of the invention to improve upon the known art.

According to a first aspect of the present invention, there is provided a method of operating a system of devices comprising receiving audio/visual content to be rendered, receiving augmentation data for controlling one or more effects devices, rendering the content at a first device, controlling the or each effects devices according to the augmentation data in synchronization with the content rendering, characterised in that the method further comprises monitoring the synchronization of the augmentation data by calculating a trust factor, and adjusting the controlling of one or more effects devices if the synchronization of the augmentation data is determined to be in doubt if the trust factor falls below a predetermined threshold.

According to a second aspect of the present invention, there is provided a system comprising a first device arranged to render audio/visual content, one or more effects devices, and a control device arranged to receive augmentation data for controlling the or each effects devices, to control the or each effects devices according to the augmentation data in synchronization with the content rendering, characterised in that the control device is further arranged to monitor the synchronization of the augmentation data by calculating a trust factor, and to adjust the controlling of one or more effects devices if the synchronization of the augmentation data is determined to be in doubt if the trust factor falls below a predetermined threshold.

Owing to the invention, it is possible to provide a multimedia system for augmenting content such as a video stream that will monitor the synchronization of the additional effects and adjust the operating of the system, if it is calculated that there is reason to believe that the synchronization is not functioning properly. The system provides the adapting of the dynamics of effects, based on accuracy of synchronization time information.

The invention can be used as an extension of the amBX system. It is of particular application in situations where amBX is used for Home Cinema.

Preferably, the step of adjusting the controlling of one or more effects devices if the synchronization of the augmentation data is determined to be in doubt, comprises halting the controlling of one or more effects devices. It is possible to stop synchronization of augmentation data and content at these occasions or even decide not to play the script at all in these situations.

In other embodiments, the system proposes to lower the intensity/dynamics of the played effects or even stop rendering some effects at all (for instance the accent effects), in case there is great uncertainty about the correctness of the time alignment. The system may selectively control the effects devices according to only a portion of the augmentation data or may control the effects devices to adjust the time duration of the effects produced according to the augmentation data.

To be able to perform any of the actions as described in the proposed solution it is necessary that information is available that gives an indication of the reliability of the time-values as given by a synchronization system. This information can be called a "trust factor" and is the result of a calculation using various indicators. Indicators that could provide input, but to which the factor calculation is not limited are: discriminating power of time-values; probability of time-values; weakness ratio of time-values; temporal luminance difference ratio of time-values; and a sync indicator.

The first factor "discriminating power of time-values" relates to the uniqueness of the fingerprints found within the video stream that resulted in the chosen time-value. The second factor "probability of time-values" means the chance that the chosen time-value is the correct one. The third factor "weakness ratio of time-values" is the number of bits of the fingerprints that belong to this time-value that are weak (near the turnover point or error margin) in relation to the total number of bits of the fingerprint. The fourth factor "temporal luminance difference ratio of time-values" means the temporal luminance difference between successive frames used for the time-value versus number of frames and the fifth factor "sync indicator" is information about the level of synchronization.

The trust factor of the time-value calculated by the current position in the content can be used in deciding whether or not there is great uncertainty. If this trust factor drops under a certain threshold level, the rendering system can be informed that it is no longer to render certain type of effects (for example, very dynamic effects or large accent effects). Multiple threshold levels can be used.

It is also possible to create an embodiment in which, for instance an "extension layer" will not be rendered when the trust factor is below the threshold. This means that the data defining the augmentation effects comprises a base layer and an extension layer. This can be so that the base layer includes effects that must be rendered and the extension layer includes effects that are more complex but can be considered optional. In this embodiment, when the synchronization is detected to be in doubt, then the extension layer of the augmentation is not rendered. The control device does not use the extension layer in its control of the effects devices.

Another option could be to stop all effects of a specific type, for example rumblers (which provide vibration through seating for example), because they seem to be very annoying when not coming at the right time, i.e. not synchronized with the correct point of the content being delivered. Another possible change that could be used is for instance all fades for color changes could be made longer in duration to give less dynamic changes. The time durations of effects are altered to give an end result that is less likely to be noticeable to the user of the system, should the synchronization of the effects to the content be out of sync.

The advantage of this invention is that in cases where the synchronicity is not guaranteed, the rendering of effects can be adapted so that large mismatches will not appear. This will result in a better experience for the user, and will result in a better acceptation of the Home Cinema product.

The following extension can also be proposed to the basic embodiment. The system can be adapted to define multiple threshold levels to decide on the type of effects that will or will not be rendered. Multiple extension layers within the augmentation data can be defined, either explicitly within the data, or by the control device in real-time. Depending upon the perceived extent of the lack of synchronization, different ones of the layers can be used to control the effects devices.

If the trust-factor is being used, and drops below the lowest level, the system could also adapt by deciding to stop the rendering of the augmentation in total and for instance a real-time content analysis component can take over the control of the effects devices to provide some level of augmentation based upon the actual content being rendered to the user.

### BRIEF DESCRIPTION OF THE DRAWINGS

Embodiments of the present invention will now be described, by way of example only, with reference to the accompanying drawings, in which:
Fig. 1 is a schematic diagram of a system of devices,
Fig. 2 is a top plan view of a multimedia home entertainment system,
Fig. 3 is a schematic diagram showing the interconnection of the devices of the system of Fig. 2,
Fig. 4 is a diagram of a video content and related augmentation data, and
Fig. 5 is a flowchart of a method of operating a system.

### DETAILED DESCRIPTION OF THE EMBODIMENTS

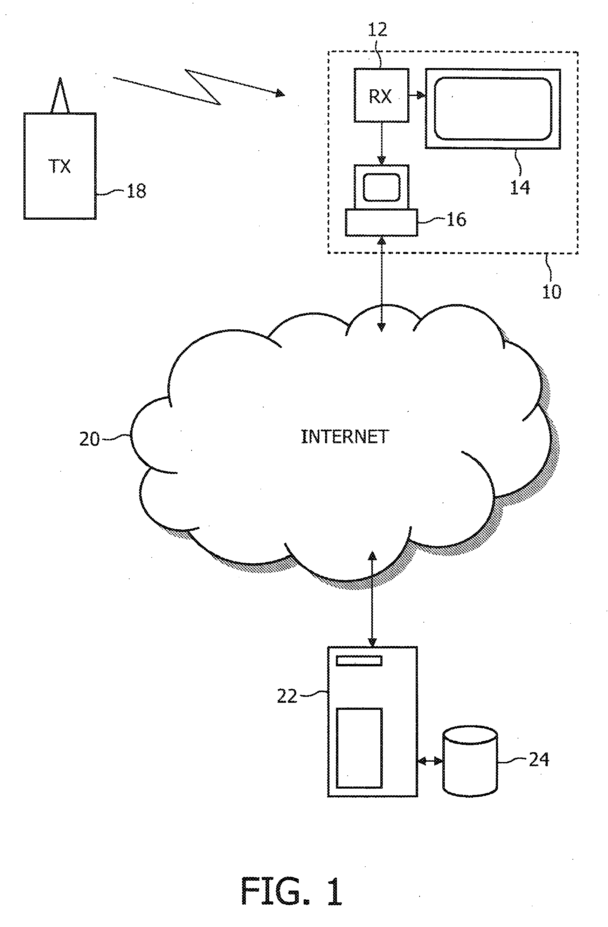

Fig. 1 shows a home entertainment location 10, which contains a digital television receiver 12, a display device 14 and a computer 16. A transmitter 18 transmits a digital television signal to the receiver 12. The receiver 12 is configured to decode the signal and to pass the display component to the display device 14. The computer 16 also receives an output from the digital receiver 12. The computer 16 is connected to the Internet 20, and can communicate with a server 22, which is connected to a database 24.

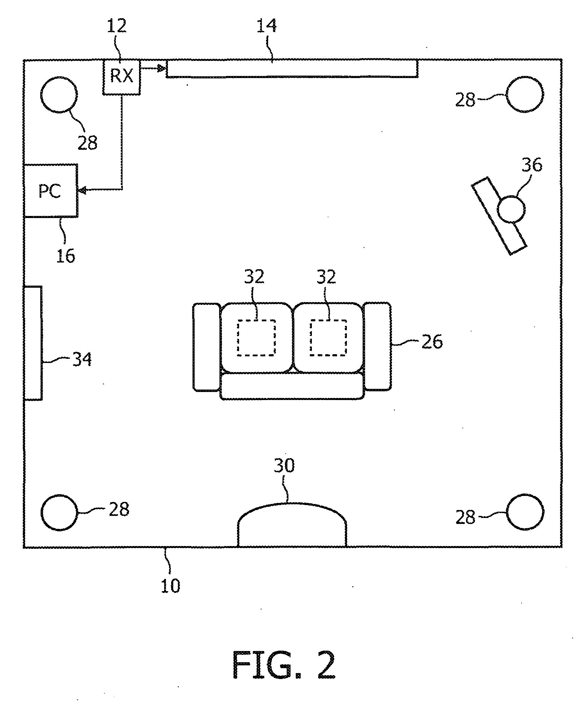

The location 10 defines a home entertainment system, which contains further devices, shown in more detail in Fig. 2. A user of the system may be watching a film that is broadcast from the transmitter 18 to the receiver 12. The content of the film is rendered by the display device 14. The computer 16 is managing a connection through the Internet 20 to the server 22. The computer is obtaining augmentation data from the database 24, which relates to the film being watched by the user.

The system shown in Fig. 1 is only one example of how an augmentation system may be configured and used. The location 10 may actually have no external connections, and all content and data may be acquired locally. For example, the user may be watching a film that is stored on a DVD with a DVD player connected to the display device 14, and the computer may have the augmentation data needed for the film already locally stored, or this data could even be available from the DVD on which the film is being played. Nevertheless, the type of system shown in Fig. 1 its likely to be the most common, as it had the flexibility to deliver content and augmentation data from a wide variety of sources.

Fig. 2 shows the location 10 in more detail. Fig. 2 is top plan view, looking down on a location such as the main living room of a house. The location 10 could be (part of) a hotel room, or could be a public space such as bar etc. The location 10 includes the receiver 12, the display device 14. and the computer 16. The user has a couch 26 in which they can watch the display device 14, which is showing the film received by the digital receiver 12 from the transmitter 18.

In addition to the devices mentioned above, the location is provided with a number of effects devices, which are used to provide augmentation of the film being shown on the display device 14. These devices are spotlights 28, an ambient diffusing light 30, rumblers 32 (providing vibration), a heating device 34 and a cooling device 36 (a fan). These effects devices are designed to provide additional components to the multimedia experience of the user and are each wirelessly connected to the computer 16. Different combinations of effects devices can be used in the system shown in Fig. 2; this will depend upon the installation of the system, in relation to the requirements of the user. The positioning and numbers of effects devices is all user configurable.

The system of Fig. 2 comprises a first device arranged to render content (which is the display device 14), the effects devices 28 to 36, and a control device, which is the computer 16. The control device 16 is arranged to receive the augmentation data for controlling each of the effects devices and controls the effects devices according to the augmentation data in synchronization with the content rendering.

The augmentation data that is used by the control device 16 to control the effects devices around the room 10 can be defined in a variety of different ways. The augmentation data may be highly generalized, requiring complicated processing by the control device 16 to interpret the data, or may be very specific, with detailed instructions concerning parameters and specific device types, or may be somewhere in-between these two extremes. For example, if the augmentation data relates to a scene in the film which is underwater, then augmentation data may include the components "WATER" and "COLD" or may include specific temperature values such as 10 degC and RGB codes for the color blue. If the control device 16 receives the components "WATER" and "COLD", then these must be interpreted into specific actuation values for those effects devices that are to be operated to provide the ambient environment that will augment the displayed scene in the film. The augmentation data may also include metadata. For example, in an embodiment where the augmentation data is provided in layers (with a base layer and one or more extension layers), then each piece of augmentation data will include information about the layer to which it belongs.

All of the augmentation that occurs has to be synchronized correctly with the content being rendered by the first device 14 (the principal device in the multimedia entertainment system). Generally, the augmentation data will include timestamps that relate to specific times when specific effects will be delivered, or that relate to start and end times for more effects that occur over a period of time. These timestamps have to be matched to the content. As has been discussed above, the synchronization of effects with the content is inherently open to uncertainty. Even if a system is used that states times when effects are to be delivered that are calculated from an absolute value such as the start of a film, this cannot always be relied upon to deliver a working system. This is because things such as the insertion of adverts, and the deletion of scenes for censorship reasons makes the timing of scenes within a film open to error.

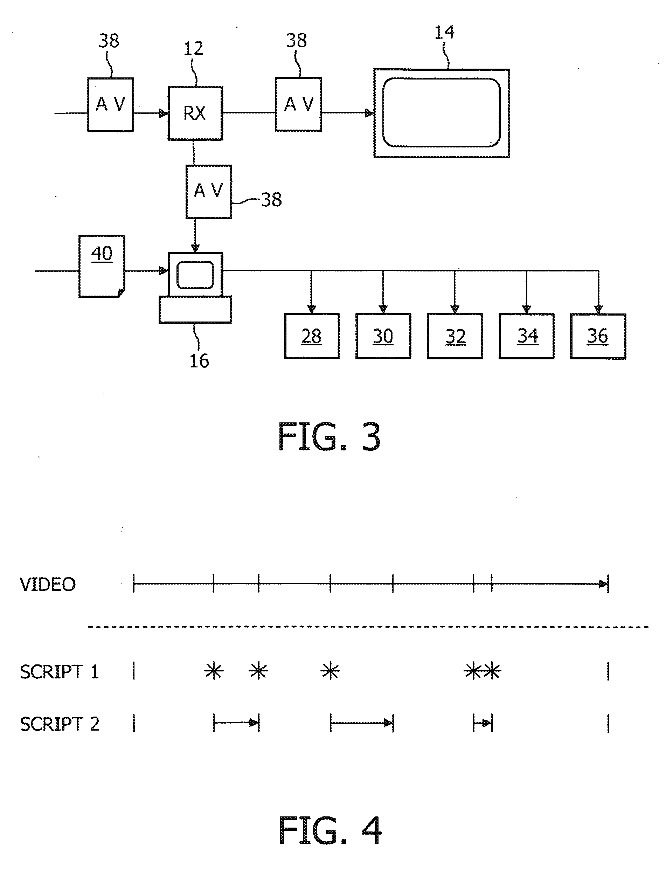

One way in which augmentation effects are synchronized with the scenes of a film is to monitor the film as it is being shown by the display device 14. Fig. 3 shows the components making up the system of Fig. 2, operated in this way. The original content 38 is received by the receiver 12, shown in the Fig. as "AV" meaning audio/visual information. This content 38 is rendered by the first device 14, and is also passed to the control device 16, which is the computer 16.

The audio/visual content 38 is analyzed by the computer 16. This can take many forms, but one method is to calculate the difference of the average luminance values for each of the predefined blocks of successive frames of the video portion of the content 38. This will return a sequence of numbers, and will have the advantage of working with a wide variety of existing home entertainment configurations, as access to the underlying data in the content 38 is not needed. The calculation can be made by the control device 16 on an analogue conversion of the content 38. A conventional digital television receiver 12 will have an analogue output that can be fed to the computer 16 for this calculation to be made.

Once a long enough stream of frames has been used to calculate the average luminance values to a reasonably lengthy sequence, then this data can be sent via the Internet 20 to the server 22 (Fig. 1). The server 22 will then compare this sequence to values stored in the database 24, and use this to identify the film being shown by the display device 14. Augmentation data 40 for that film can then be transmitted back to the computer 16. The advantage of this set-up is that the various providers are isolated, and the user at the location 10 can obtain augmentation data 40 for virtually any content provided from virtually any source, as long as the server 22 can identify the content from the data sent by the control device 16.

The augmentation data 40 sent back by the server 22 will contain instructions for the control device 16 to use to control the various effects devices. As discussed above, these instructions may be generalized or highly specific. They must also contain synchronization information, which may be timestamps, or may be luminance values of frames within the content 38 to which the parts of the augmentation data 40 are to be synchronized when the data 40 is used to generate augmenting effects.

For example, the augmentation data 40 may include a component, which states:
40-158-52-73-80 "EXPLOSION" "HEAT"

The first sequence of five numerical values refers to the average luminance values of five successive frames of the film, which are synchronized with a scene showing a volcanic eruption in the film. The second part comprising "EXPLOSION" and "HEAT" is the actual augmentation data that is to be used by the control device 16 to control the various effects devices to render this effect. In this example, the augmentation data is very generalized, and the control device 16 will need to generate specific device instructions to send to the specific effects devices. In this case, those instructions may be commands to the rumblers 32 to generate a short burst of vibration, to the heater 34 to send out a blast of hot air, and to the ambient diffusing light 30 to emit a changing pattern of red and orange light. The effects together provide the augmentation to the user in the multimedia entertainment system.

As will be appreciated, a correct synchronization of the effects devices to the content being rendered by the first device 14 is very important for the user's enjoyment. For this reason, the control device 16 is configured to monitor the synchronization of the augmentation data 40, and to adjust the controlling of one or more effects devices if the synchronization of the augmentation data is determined to be in doubt.
There are many ways in which the synchronization can be monitored by the control device 16. The control device 16 can calculate a trust factor, and the synchronization of the augmentation data 40 is determined to be in doubt if the trust factor falls below a predetermined threshold. This trust factor can be based on a single or multiple variables, according to the implementation of the system.

In the example augmentation data above, the control device 16 is looking for the average luminance values 40-158-52-73-80, in order to trigger the effects devices in synchronization with these values. However, because of the inevitability of errors occurring in the process, such as the possibility of variances occurring in the communication chain from the original transmitter 18, then a certain tolerance in the calculated luminance values will be accepted when the control device 16 is calculating whether there is a match. This tolerance might be 5%, or may be +/- figure such as +/-2. This would mean that if the control device 16 calculates a sequence of average luminance values of 40-158-50-72-80, then this is considered to be a good enough match to the desired 40-158-52-73-80 to trigger the effects devices with the instructions derived from the augmentation data 40.

While monitoring the luminance values of the frames in the video portion of the content 38, the control device 16 can use the error detected to calculate the trust factor. This may be a calculated variance from the expected values such as a total error over five frames, from the expected value. In the case of 40-158-50-72-80 calculated when 40-158-52-73-80 is expected (or being looked for) then the total error is +/-3 (50 when 52 was expected plus 72 when 73 was expected). An error up to 8 may be considered allowable to use as a trigger for the augmentation data 40. If this error is exceeded, then the system has entered a state wherein the synchronization of the augmentation data 40 is determined to be in doubt.

Once the control device 16 has detected that the synchronization of the augmentation data 40 to the content 38 is in doubt, then action is taken to adjust the controlling of one or more effects devices, in response to this state being reached. The actual action undertaken in response can be of a number of different forms. The action chosen could also depend upon the nature of the perceived level of doubt about the synchronization (in effect based upon the measured error from the expected calculation).

The simplest version of the adjusting of the controlling of the effects devices, if the synchronization of the augmentation data is determined to be in doubt, comprises halting the controlling of one or more effects devices. This could be the total cessation of the operation of all of the effects devices in the augmentation system, or could be just the halting of certain of the devices, such as the rumblers 32, which arc perceived to have the greatest annoyance factor, if they are activated at the wrong time.

A second option for the adjusting of the controlling of the effects devices, if the synchronization of the augmentation data is determined to be in doubt, comprises selectively controlling one or more effects devices according to only a portion of the augmentation data. This would mean that a division of the augmentation data 40 is made, splitting the data 40 into one or more groups. This split may be inherent in the data 40 as delivered to the control device 16, or may be made by the control device 16 in real-time. Fig. 4 shows a conceptual diagram of a video signal over time, with the vertical lines in the signal showing specific events such as the start and end of scenes or on-off events such as the volcanic explosion mentioned above.

Below the video signal is a separate portion showing two scripts 1 and 2, which comprise the augmentation data 40 delivered to the control device 16. These scripts could be XML documents making up the augmentation data 40, for example. The first script 1 defines augmentation data for various on-off events that are designed to coincide with specific points in the video content 38, and shown by the stars. The second script 2 defines further augmentation data that is designed to be synchronized with entire scenes of the film making up the video, and are shown by the arrows.

In the case where the response to the detection that the synchronization of effects to content is in doubt is to selectively control the effects devices according to only a portion of the augmentation data 40, then script 1 may be dropped by the control device 16 and only script 2 is used to control the effects devices. This is because the data defined in script 2 is less time sensitive, and incorrect synchronization is less likely to be noticed by the user. The effects defined by the augmentation data in script 1 are designed to be very closely synchronized with specific events in the film, defined by the video signal, such as scene changes. Such effects, if incorrectly synchronized, will be very annoying to a user.

The adjusting of the controlling of one or more effects devices, if the synchronization of the augmentation data is determined to be in doubt, can comprise controlling one or more effects devices to lower the intensity of the effects delivered. For example, the control device may tone down some or all of the effects delivered, to reduce their annoyance to the user, if they are perceived to be at the wrong time in the experience. For lighting effects, for example, the control device 16 may reduce the intensity of the effect.

Another way that the control device 16 can alter the effects when adjusting the controlling of one or more effects devices, if the synchronization of the augmentation data is determined to be in doubt, can comprise controlling one or more effects devices to adjust the time duration of the effects produced according to the augmentation data 40. This might mean that an effect such as an ambient light color that is used to accompany a scene in the film is extended to occupy a longer period of time then was originally intended. This will attempt to cover over any error in synchronization that is occurring. The change in time durations of effects can be used to merge two previously separate effects together, so that a change from red lighting to blue lighting, for example, can be controlled as a fade from one to the other, rather than an abrupt change in color, which if not correctly synchronized with the film will be very noticeable.

The decisions made by the control device 16 in relation to the control of the effects devices can be combined, when the control device 16 detects that the synchronization is in doubt. Some effects could be dropped altogether, some devices could be halted, while other effects are extended in time or have their intensity adjusted, perhaps to fade in and out effects that otherwise would have short intense bursts. The dynamics of the effects produced are changed by the control device 16 when synchronization of the augmentation data 40 to the original content 38 is detected to be in doubt.

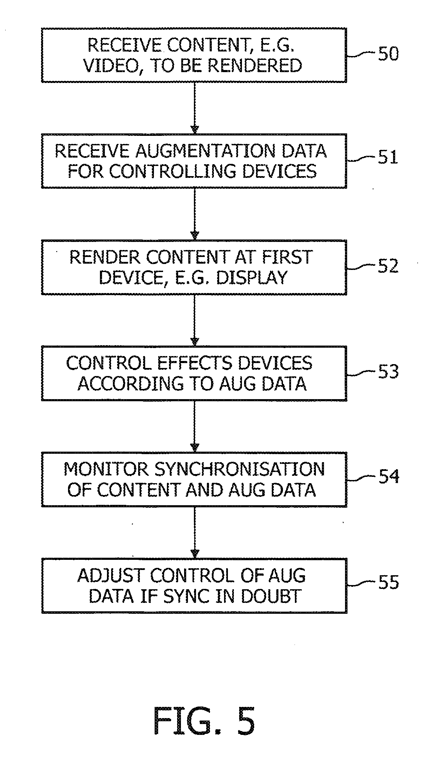

Fig. 5 summarizes the steps taken by the system, when operated according to one embodiment of the invention. The method of operating the system of devices comprising receiving content 38 to be rendered (step 50), receiving augmentation data 40 (step 51) for controlling one or more effects devices 28 to 36, rendering (step 52) the content 38 at the first device 14, controlling (step 53) the or each effects devices 28 to 36 according to the augmentation data 40 in synchronization with the content rendering, monitoring (step 54) the synchronization of the augmentation data 40, and adjusting the controlling of one or more effects devices (step 55) if the synchronization of the augmentation data 40 is determined to be in doubt.

## Claims

1. A method of operating a system of devices comprising receiving audio/visual content (38) to be rendered, receiving augmentation data (40) for controlling one or more effects devices (28 - 36), rendering the content (38) at a first device (14), controlling the or each effects devices (28 - 36) according to the augmentation data (40) in synchronization with the content (38) rendering, **characterised in that** the method further comprises monitoring the synchronization of the augmentation data (40) by calculating a trust factor, and adjusting the controlling of one or more effects devices (28 - 36) if the synchronization of the augmentation data (40) is determined to be in doubt if the trust factor falls below a predetermined threshold.

2. A method according to claim 1, wherein the content (38) to be rendered comprises a video stream, and the first device (14) comprises a display device (14).

3. A method according to claim 1 or 2, wherein the step of adjusting the controlling of one or more effects devices (28 - 36) if the synchronization of the augmentation data (40) is determined to be in doubt, comprises halting the controlling of one or more effects devices (28 - 36).

4. A method according to claim 1 or 2, wherein the step of adjusting the controlling of one or more effects devices (28 - 36) if the synchronization of the augmentation data (40) is determined to be in doubt, comprises selectively controlling one or more effects devices (28 - 36) according to only a portion of the augmentation data (40).

5. A method according to claim 1 or 2, wherein the step of adjusting the controlling of one or more effects devices (28 - 36) if the synchronization of the augmentation data (40) is determined to be in doubt, comprises controlling one or more effects devices (28 - 36) to lower the intensity of the effects delivered.

6. A method according to claim 1 or 2, wherein the step of adjusting the controlling of one or more effects devices (28 - 36) if the synchronization of the augmentation data (40) is determined to be in doubt, comprises controlling one or more effects devices (28 - 36) to adjust the time duration of the effects produced according to the augmentation data (40).

7. A system comprising a first device (14) arranged to render audio/visual content (38), one or more effects devices (28 - 36), and a control device (16) arranged to receive augmentation data (40) for controlling the or each effects devices (28 - 36), to control the or each effects devices (28 - 36) according to the augmentation data (40) in synchronization with the content (38) rendering, **characterised in that** the control device (16) is further arranged to monitor the synchronization of the augmentation data (40) by calculating a trust factor, and to adjust the controlling of one or more effects devices (28 - 36) if the synchronization of the augmentation data (40) is determined to be in doubt if the trust factor falls below a predetermined threshold.

8. A system according to claim 7, wherein the content (38) to be rendered comprises a video stream, and the first device (14) comprises a display device ( 14).

9. A system according to claim 7 or 8, wherein the control device (16) is arranged when adjusting the controlling of one or more effects devices (28 - 36) if the synchronization of the augmentation data (40) is determined to be in doubt, to halt the controlling of one or more effects devices (28 - 36).

10. A system according to claim 7 or 8, wherein the control device (16) is arranged when adjusting the controlling of one or more effects devices (28 - 36) if the synchronization of the augmentation data (40) is determined to be in doubt, to selectively control one or more effects devices (28 - 36) according to only a portion of the augmentation data (40).

11. A system according to claim 7 or 8, wherein the control device (16) is arranged when adjusting the controlling of one or more effects devices (28 - 36) if the synchronization of the augmentation data (40) is determined to be in doubt, to control one or more effects devices (28 - 36) to lower the intensity of the effects delivered.

12. A system according to claim 7 or 8, wherein the control device (16) is arranged when adjusting the controlling of one or more effects devices (28 - 36) if the synchronization of the augmentation data (40) is determined to be in doubt, to control one or more effects devices (28 - 36) to adjust the time duration of the effects produced according to the augmentation data (40).

## Patentansprüche

1. Eine Methode zum Betrieb eines Systems von Geräten, die den Empfang von wiederzugebendem Audio-/visuellem Inhalt (38), den Empfang von Augmentierungsdaten (40) zur Kontrolle eines oder mehrerer Effects-Geräte (28 - 36), das Rendem von Inhalt (38) an einem ersten Gerät (14) und die Kontrolle des oder jeden Effects-Geräts (28 - 36) den Augmentierungsdaten (40) entsprechend in Synchronisation mit der Wiedergabe des Inhalts (38) umfasst, **dadurch gekennzeichnet, dass** die Methode ferner die Überwachung der Synchronisation der Augmentierungsdaten (40) durch Kalkulation eines Vertrauensfaktors und Anpassung der Kontrolle eines oder mehrerer Effects-Geräte (28 - 36) umfasst, falls die Synchronisation der Augmentierungsdaten (40) in Zweifel gestellt ist, wenn der Vertrauensfaktor eine vorherbestimmte Schwelle unterschreitet.

2. Eine Anspruch 1 entsprechende Methode, bei welcher der wiederzugebende Inhalt (38) einen Videostream und das erste Gerät (14) ein Anzeigegerät (14) umfasst.

3. Eine Anspruch 1 oder 2 entsprechende Methode, bei welcher der Schritt zum Anpassen der Kontrolle eines oder mehrerer Effects-Geräte (28 - 36), falls die Synchronisation der Augmentierungsdaten (40) in Zweifel gestellt ist, das Anhalten der Kontrolle eines oder mehrerer Effects-Geräte (28 - 36) umfasst.

4. Eine Anspruch 1 oder 2 entsprechende Methode, bei welcher der Schritt zum Anpassen der Kontrolle eines oder mehrerer Effects-Geräte (28 - 36), falls die Synchronisation der Augmentierungsdaten (40) in Zweifel gestellt ist, eine nur einem Teil der Augmentierungsdaten (40) entsprechende selektive Kontrolle eines oder mehrerer Effects-Geräte (28 - 36) umfasst.

5. Eine Anspruch 1 oder 2 entsprechende Methode, bei welcher der Schritt zum Anpassen der Kontrolle eines oder mehrerer Effects-Geräte (28 - 36), falls die Synchronisation der Augmentiemngsdaten (40) in Zweifel gestellt ist, die Kontrolle eines oder mehrerer Effects-Geräte (28 - 36) umfasst, um die Intensität der angelieferten Effects zu verringem.

6. Eine Anspruch 1 oder 2 entsprechende Methode, bei welcher der Schritt zum Anpassen der Kontrolle eines oder mehrerer Effects-Geräte (28 - 36), falls die Synchronisation der Augmentierungsdaten (40) in Zweifel gestellt ist, die Kontrolle eines oder mehrerer Effects-Geräte (28 - 36) umfasst, um die Zeitdauer der den Augmentierungsdaten (40) entsprechend erzeugten Effects anzupassen.

7. Ein System, das ein erstes, zur Wiedergabe von Audio-lvisuellem Inhalt (38) angeordnetes Gerät (14), ein oder mehrere Effects-Geräte (28 - 36) und ein zum Empfang von Augmentierungsdaten (40) zwecks Kontrolle des oder jeden Effects-Geräts (28 - 36) angeordnetes Kontrollgerät (16) umfasst, um das oder jedes Effects-Gerät (28 - 36) den Augmentierungsdaten (40) entsprechend in Synchronisation mit der Wiedergabe des Inhalts (38) zu kontrollieren, **dadurch gekennzeichnet, dass** das Kontrollgerät (16) ferner zum Überwachen der Synchronisation der Augmentierungsdaten (40) anhand der Kalkulation eines Vertrauensfaktors und zur Anpassung der Kontrolle eines oder mehrerer Effects-Geräte (28 - 36) angeordnet ist, falls die Synchronisation der Augmentierungsdaten (40) in Zweifel gestellt ist, wenn der Vertrauensfaktor eine vorherbestimmte Schwelle unterschreitet.

8. Ein Anspruch 7 entsprechendes System, bei welchem der wiederzugebende Inhalt (38) einen Videostream und das erste Gerät (14) ein Anzeigegerät (14) umfasst.

9. Ein Anspruch 7 oder 8 entsprechendes System, bei welchem das Kontrollgerät (16) bei der Anpassung der Kontrolle eines oder mehrerer Effects-Geräte (28 - 36), wenn die Synchronisation der Augmentierungsdaten (40) in Zweifel gestellt ist, so angeordnet ist, um die Kontrolle eines oder mehrerer Effects-Geräte (28 - 36) anzuhalten.

10. Ein Anspruch 7 oder 8 entsprechendes System, bei welchem das Kontrollgerät (16) bei der Anpassung der Kontrolle eines oder mehrerer Effects-Geräte (28 - 36), wenn die Synchronisation der Augmentierungsdaten (40) in Zweifel gestellt ist, so angeordnet ist, um eines oder mehrere Effects-Geräte (28 - 36) nur einem Teil der Augmentierungsdaten (40) entsprechend selektiv zu kontrollieren.

11. Ein Anspruch 7 oder 8 entsprechendes System, bei welchem das Kontrollgerät (16) bei der Anpassung der Kontrolle eines oder mehrerer Effeets-Geräte (28 - 36), wenn die Synchronisation der Augmentierungsdaten (40) in Zweifel gestellt ist, so angeordnet ist, um ein oder mehrere Effects-Geräte (28 - 36) zur Verringerung der Intensität der angelieferten Effects zu kontrollieren.

12. Ein Anspruch 7 oder 8 entsprechendes System, bei welchem das Kontrollgerät (16) bei der Anpassung der Kontrolle eines oder mehrerer Effects-Geräte (28 - 36), wenn die Synchronisation der Augmentierungsdaten (40) in Zweifel gestellt ist, so angeordnet ist, um ein oder mehrere Effects-Geräte (28 - 36) zur Anpassung der Zeitdauer der den Augmentierungsdaten (40) entsprechend erzeugten Effects zu kontrollieren.

## Revendications

1. Procédé d'exploitation d'un système de dispositifs comportant un contenu audio/visuel (38) appelé à être rendu, la réception de données d'augmentation (40) pour la commande d'un ou de plusieurs dispositifs d'effets (28 - 36), le rendu du contenu (38) au niveau d'un premier dispositif (14), la commande du ou de chacun des dispositifs d'effets (28 - 36) en fonction des données d'augmentation (40) en synchronisation avec le rendu du contenu (38), **caractérisé en ce que** le procédé comprend en outre la surveillance de la synchronisation des données d'augmentation (40) par le calcul d'un facteur de confiance et la mise au point de la commande d'un ou de plusieurs dispositifs d'effets (28 - 36) au cas où la synchronisation des données d'augmentation (40) serait déterminée comme étant incertaine si le facteur de confiance descend en-dessous d'un seuil prédéterminé.

2. Procédé selon la revendication 1, dans lequel le contenu (38) appelé à être rendu comprend un flux vidéo et le premier dispositif (14) comprend un dispositif d'affichage (14).

3. Procédé selon la revendication 1 ou 2, dans lequel l'étape de la mise au point de la commande d'un ou de plusieurs dispositifs d'effets (28 - 36) au cas où la synchronisation des données d'augmentation (40) serait déterminée comme étant incertaine, comprend l'arrêt de la commande d'un ou de plusieurs dispositifs d'effets (28 - 36).

4. Procédé selon la revendication 1 ou 2, dans lequel l'étape de la mise au point de la commande d'un ou de plusieurs dispositifs d'effets (28 - 36) au cas où la synchronisation des donnés d'augmentation (40) serait déterminée comme étant incertaine, comprend la commande sélective d'un ou de plusieurs dispositifs d'effets (28 - 36) selon une partie seulement des données d'augmentation (40).

5. Procédé selon la revendication 1 ou 2, dans lequel l'étape de la mise au point de la commande d'un ou de plusieurs dispositifs d'effets (28 - 36) au cas où la synchronisation des données d'augmentation (40) serait déterminée comme étant incertaine, comprend la commande d'un ou de plusieurs dispositifs d'effets (28 - 36) de manière à baisser l'intensité des effets diffusés.

6. Procédé selon la revendication 1 ou 2, dans lequel l'étape de la mise au point de la commande d'un ou de plusieurs dispositifs d'effets (28 - 36) au cas où la synchronisation des données d'augmentation (40) serait déterminée comme étant incertaine, comprend la commande d'un ou de plusieurs dispositifs d'effets (28 - 36) de manière à ajuster la durée des effets produits selon les données d'augmentation (40).

7. Système comprenant un premier dispositif (14) appelé à rendre un contenu audio/visuel (38), un ou plusieurs dispositifs d'effets (28 - 36) et un dispositif de commande (16) destiné à recevoir des données d'augmentation (40) pour commander le ou chacun des dispositifs d'effets (28 - 36), de manière à commander le ou chacun des dispositifs d'effets (28 - 36) selon les données d'augmentation (40) en synchronisation avec le contenu (38) rendu, **caractérisé en ce que** le dispositif de commande (16) est en outre destiné à surveiller la synchronisation des données d'augmentation (40) en calculant un facteur de confiance, et à mettre au point la commande d'un ou de plusieurs dispositifs d'effets (28 - 36) au cas où la synchronisation des données d'augmentation (40) serait déterminée comme étant incertaine si le facteur de confiance descend sous un seuil prédéterminé.

8. Système selon la revendication 7, dans lequel le contenu (38) appelé à être rendu comprend un flux vidéo et le premier dispositif (14) comprend un dispositif d'affichage (14).

9. Système selon la revendication 7 ou 8, dans lequel le dispositif de commande (16) est destiné, lors de la mise au point de la commande d'un ou de plusieurs dispositifs d'effets (28 - 36) au cas où la synchronisation des données d'augmentation (40) serait déterminée comme étant incertaine, à arrêter la commande d'un ou de plusieurs dispositifs d'effets (28 - 36).

10. Système selon la revendication 7 ou 8, dans lequel le dispositif de commande (16) est destiné, lors de la mise au point de la commande d'un ou de plusieurs dispositifs d'effets (28 - 36) au cas où la synchronisation des données d'augmentation (40) serait déterminée comme étant incertaine, à commander sélectivement un ou plusieurs dispositifs d'effets (28 - 36) selon une partie seulement des données d'augmentation (40).

11. Système selon la revendication 7 ou 8, dans lequel le dispositif de commande (16) est destiné, lors de la mise au point de la commande d'un ou de plusieurs dispositifs d'effets (28 - 36) au cas où la synchronisation des données d'augmentation (40) serait déterminée comme étant incertaine, à commander un ou plusieurs dispositifs d'effets (28 - 36) de manière à baisser l'intensité des effets diffusés.

12. Système selon la revendication 7 ou 8, dans lequel le dispositif de commande (16) est destiné, lors de la mise au point de la commande d'un ou de plusieurs dispositifs d'effets (28 - 36) au cas où la synchronisation des données d'augmentation (40) serait déterminée comme étant incertaine, à commander un ou plusieurs dispositifs d'effets (28 - 36) de manière à ajuster la durée des effets produits en fonction des données d'augmentation (40).
